# FASCICULE DE BREVET EUROPEEN

(11) **EP 4 621 263 B1**
(45) Date de publication et mention de la délivrance du brevet: **10.06.2026**
(21) Numéro de dépôt: 25159106.1
(22) Date de dépôt: 20.02.2025
(51) Int. Cl.: F16H 25/22, F16D 65/18, F16H 25/24

(54) **PROCÉDÉ DE FABRICATION D'UN PISTON D'UN MÉCANISME D'ACTIONNEUR DE FREIN ET PISTON FABRIQUÉ SELON CE MÊME PROCÉDÉ DE FABRICATION**
ANSTECKHÜLSE AN EINER KUGELGEWINDEMUTTER
SOCKET ATTACHED TO A BALL SCREW NUT

(30) Priorité: 22.03.2024 FR 2402914
(43) Date de publication de la demande: 24.09.2025
(73) Titulaire: NTN Europe, 74000 Annecy (FR)
(72) Inventeur: THOLLIN, Nicolas, 74010 ANNECY Cedex (FR)
(74) Mandataire: Alatis

(56) Documents cités:
- EP-B1- 2 304 265
- EP-B1- 2 787 248
- WO-A1-2014/184154

## Description

### DOMAINE TECHNIQUE DE L'INVENTION

L'invention se rapporte au domaine des actionneurs, notamment pour l'industrie du transport, notamment automobile ou aéronautique, notamment aux pistons dans des mécanismes entraînés par une vis sans fin, en particulier une vis à billes et plus particulièrement, bien que de façon non exclusive, aux pistons d'étrier de frein dans des mécanismes de freinage entraînés par une vis sans fin, en particulier une vis à billes.

### ÉTAT DE LA TECHNIQUE ANTÉRIEURE

Dans le document EP 2 787 248 B1 est divulgué un mécanisme d'actionneur de frein comportant une vis, un écrou et des billes positionnées entre un filetage hélicoïdal de la vis et un filetage hélicoïdal de l'écrou, l'écrou formant un piston logé dans un cylindre de guidage. Le mécanisme de vis à bille formé par la vis, l'écrou et les billes nécessite, au niveau des filetages de la vis et de l'écrou, une dureté suffisante. Ce type de piston est positionné à proximité de l'étrier de frein, et soumis à des pollutions intenses venant de son environnement extérieur direct, qui peuvent se traduire par une corrosion au niveau de l'écrou. Pour protéger le mécanisme de vis à billes, on est amené à maintenir un faible jeu constructif entre le piston et son cylindre de guidage, ce qui génère des risques d'abrasion, accentué par la présence des polluants. Les risques de défaillance du mécanisme sont donc nombreux.

Dans le document EP 2 304 265 B1 est divulgué un mécanisme d'actionneur de frein comportant un piston coulissant dans un cylindre et mu par un mécanisme de vis à billes. Le piston est réalisé en plusieurs pièces, et intègre l'écrou du mécanisme de vis à billes, une pièce de poussée massive dans laquelle est fretté l'écrou, et une pièce extérieure frettée sur la pièce de poussée, la pièce extérieure présentant un fond sur lequel vient en appui une surface tronconique de la pièce de poussée. Cette réalisation du piston en trois pièces vise à mettre en commun certaines des pièces du piston dans plusieurs modèles de dimensions différentes, la pièce de poussée intermédiaire étant en quelque sorte une pièce d'adaptation.

### EXPOSÉ DE L'INVENTION

L'invention vise à remédier aux inconvénients de l'état de la technique et à proposer un piston plus résistant à l'abrasion et la corrosion et économiquement avantageux, tout en restant compact.

Pour ce faire est proposé, selon un premier aspect de l'invention, un procédé de fabrication d'un piston d'un mécanisme d'actionneur de frein, le piston comportant un écrou de mécanisme de vis à billes, définissant un axe de référence, une paroi périphérique extérieure et un filet d'écrou destiné à former un chemin de roulement pour des billes du mécanisme de vis à billes ; une douille solidaire de l'écrou et recouvrant au moins partiellement la paroi périphérique extérieure de l'écrou, la douille étant destinée à venir en contact glissant ajusté avec une paroi de guidage intérieure d'un cylindre de guidage du mécanisme d'actionneur de frein ; remarquable en ce qu'avant de solidariser la douille à la paroi périphérique extérieure de l'écrou, la douille est soumise à un traitement thermochimique de résistance à l'abrasion et à la corrosion à une température Ts jusqu'à obtention d'une couche de surface de résistance à l'abrasion et à la corrosion riche en azote, et l'écrou est soumis à un traitement thermochimique de durcissement incluant une chauffe à une température Tc supérieure d'au moins 200°C à Ts, puis une trempe et un revenu à une température Tr inférieure d'au moins 100°C à Ts, et l'obtention d'une zone durcie riche en carbone au moins localement au niveau du filet d'écrou.

Le traitement thermochimique de résistance à l'abrasion et à la corrosion et le traitement thermochimique de durcissement attribuent des avantages distincts à un même matériau. Cependant, les procédés de mise en œuvre de chacun des deux traitements diffèrent et, quel que soit l'ordre de mise en œuvre de ces traitements sur une même pièce, les propriétés apportées par l'un effacent les propriétés apportées par l'autre. Plus spécifiquement, en supposant que l'on commence à traiter une pièce pour augmenter son durcissement par un traitement thermochimique avec enrichissement en carbone impliquant en fin de traitement une trempe et un revenu à une température de revenu Tr, le traitement ultérieure d'une autre partie de la même pièce à une température Ts sensiblement supérieure à la température de revenu Tr va supprimer les effets de la trempe et du revenu, libérer les composés carbonés et supprimer l'effet de durcissement recherché avec le traitement initial de durcissement. Inversement, si l'on effectue sur une pièce un traitement thermochimique initial de résistance à l'abrasion à une température Ts impliquant un enrichissement d'une zone de surface de la pièce en azote, un traitement ultérieur de durcissement d'une autre partie de la même pièce à une température Tc sensiblement supérieure à Ts a pour conséquence de libérer les composés azotés retenus à la surface du matériau lors du traitement initial. Il n'est donc pas possible d'avoir une pièce monobloc possédant les propriétés recherchées apportées par les deux traitements, de manière économiquement viable. En effectuant ces deux traitements chacun sur une pièce distincte, à savoir la douille et l'écrou, destinées à être assemblées, il devient possible de proposer un piston composite présentant l'ensemble des propriétés recherchées.

L'écrou est de préférence en acier, par exemple l'acier 20MnCr5, 23MnB4, Scr420, 16MnCr5 ou leurs équivalents suivant les autres normes internationales ou nationales, ou de l'acier à haut taux de carbone tel que l'acier 100Cr6, C50 ou C56 ou leurs équivalents. Le traitement thermochimique de durcissement est de préférence un traitement en milieu gazeux. Les étapes de trempe et revenu permettent d'atteindre une dureté de surface élevée, par exemple une dureté supérieure à 58 HRC (dureté Rockwell), et de conserver une ténacité élevée au cœur de la pièce. Grâce à ce traitement, le filet d'écrou a une dureté accrue, ce qui lui permet d'être plus durable en résistant à l'écaillage par exemple. Le traitement thermochimique de durcissement peut être un traitement de surface, mais est de préférence un traitement en profondeur sur une épaisseur dépassant 0,5 mm, et de préférence dépassant 2mm. Il peut également s'agir d'un traitement à cœur.

Selon un mode de réalisation, le traitement thermochimique de durcissement inclut un traitement de cémentation, la température Tc étant supérieure à 900°C, la température Tr étant inférieure à 250°C. Alternativement, il peut s'agir d'un traitement de carbonitruration.

La douille est de préférence en acier, ou dans un matériau contenant essentiellement de l'acier. Selon un mode de réalisation, le traitement de résistance à l'abrasion et à la corrosion inclut une nitruration ou une nitrocarburation, la température Ts étant comprise entre 300°C et 580°C. Grâce à ce traitement, le piston résiste à l'abrasion et à la corrosion, susceptibles d'être initiées par ses mouvements en translation et la pollution particulaire dans le cylindre de guidage.

Selon un mode de réalisation, une face extérieure de la douille est rectifiée avant d'être soumise au traitement thermochimique de résistance à l'abrasion et à la corrosion, afin que la surface extérieure de la douille soit parfaitement lisse, ce qui permet une diminution des frottements du piston dans le cylindre de guidage donc une amélioration du rendement, ainsi qu'une augmentation de la résistance à l'abrasion et à la corrosion.

Selon un mode de réalisation, après achèvement du traitement thermochimique de résistance à l'abrasion et à la corrosion et du traitement thermochimique de durcissement, la douille est solidarisée, de préférence par frettage, sur la paroi périphérique extérieure de l'écrou. De cette manière, les propriétés initialement incompatibles sont réunies sur un même ensemble de pièces monobloc. Le piston se retrouve alors plus dur au niveau du filet d'écrou et plus résistant au niveau de sa surface de contact avec le cylindre de guidage. La douille permet, de par son épaisseur relativement faible, d'apporter une propriété supplémentaire au piston sans augmenter considérablement le volume du mécanisme d'actionneur de frein.

Selon un mode de réalisation, une surface extérieure d'une paroi de fond de l'écrou ou de la douille subit un traitement anticorrosion supplémentaire, de préférence le traitement anticorrosion supplémentaire est un traitement de revêtement de zinc lamellaire, cette paroi de fond étant destinée à venir en appui direct ou indirect contre l'étrier de frein.

Selon un mode de réalisation, un coulisseau du piston subit un traitement de surface avant d'être partiellement insérée dans un logement formé dans l'écrou et la douille, de préférence le traitement de surface du coulisseau est une nitrocarburation. Le coulisseau peut le cas échéant contribuer à la cohésion entre l'écrou et la douille, mais a pour fonction principale d'assurer, en coopération avec une cannelure rectiligne formée dans le cylindre de guidage du mécanisme d'actionneur de frein, un guidage en translation sans rotation du piston dans le cylindre. Grâce à son traitement supplémentaire, le coulisseau est résistant à l'abrasion et la corrosion, permettant une durée de vie accrue au mécanisme d'actionneur de frein.

Selon un autre aspect de l'invention, celle-ci a trait à un piston remarquable en ce qu'il est fabriqué selon le procédé de fabrication tel que décrit ci-avant. Ce piston se caractérise notamment par un état métallurgique de surface au niveau de la douille, riche en azote, conséquence du traitement thermochimique de résistance à l'abrasion, et par un état métallurgique riche en carbone conférant une dureté élevée au moins au niveau du filet de l'écrou.

Selon un mode de réalisation, l'écrou présente un canal de recirculation externe ouvert, fermé au moins en partie par la douille. Cette caractéristique permet de faciliter l'usinage du canal de recirculation et, le cas échéant, l'assemblage et l'introduction des billes dans le mécanisme.

Selon un mode de réalisation, la douille présente un fond. Dans cette configuration, le fond de la douille peut le cas échéant assurer seul l'appui contre l'étrier de frein, et l'écrou peut être ouvert à ses deux extrémités axiales.

Selon un mode de réalisation, la douille présente un rabat de matière sur une face annulaire d'extrémité de l'écrou, ce qui assure un positionnement axial entre la douille et l'écrou.

Selon un mode de réalisation, le piston comprend un coulisseau en saillie axiale vers l'extérieur permettant de fixer le piston en rotation dans le cylindre de guidage, tout en permettant sa translation.

Le piston ainsi décrit est destiné en particulier à des actionneurs de freinage de véhicules.

Selon un autre aspect de l'invention, celle-ci a trait à un mécanisme d'actionneur de frein, comportant un cylindre de guidage définissant un axe de référence du mécanisme d'actionneur de frein ; un mécanisme de vis à billes, comportant une vis et un écrou centrés sur l'axe de référence, et des billes, la vis présentant au moins un filet de vis formant un chemin de roulement pour les billes, l'écrou présentant un filet d'écrou formant un chemin de roulement pour les billes et une paroi périphérique extérieure ; et une douille solidaire de l'écrou et recouvrant au moins partiellement la paroi périphérique extérieure de l'écrou, la douille venant en contact glissant ajusté avec une paroi de guidage intérieure du cylindre de guidage ; remarquable en ce que la douille et l'écrou constituent un piston tel que décrit ci-avant.

### BRÈVE DESCRIPTION DES FIGURES

D'autres caractéristiques et avantages de l'invention ressortiront à la lecture de la description qui suit, en référence aux figures annexées.
[Fig. 1] La figure 1 illustre un mécanisme d'actionnement de frein selon un mode de réalisation comprenant un piston à recirculation interne comportant un écrou fermé.
[Fig. 2] La figure 2 illustre un mécanisme d'actionnement de frein selon un mode de réalisation comprenant un piston à recirculation externe comportant un écrou fermé.
[Fig. 3] La figure 3 illustre un mécanisme d'actionnement de frein selon un mode de réalisation comprenant un piston comportant un écrou ouvert.

Pour plus de clarté, les éléments identiques ou similaires sont repérés par des signes de référence identiques sur l'ensemble des figures.

### DESCRIPTION DÉTAILLÉE DE MODES DE REALISATION

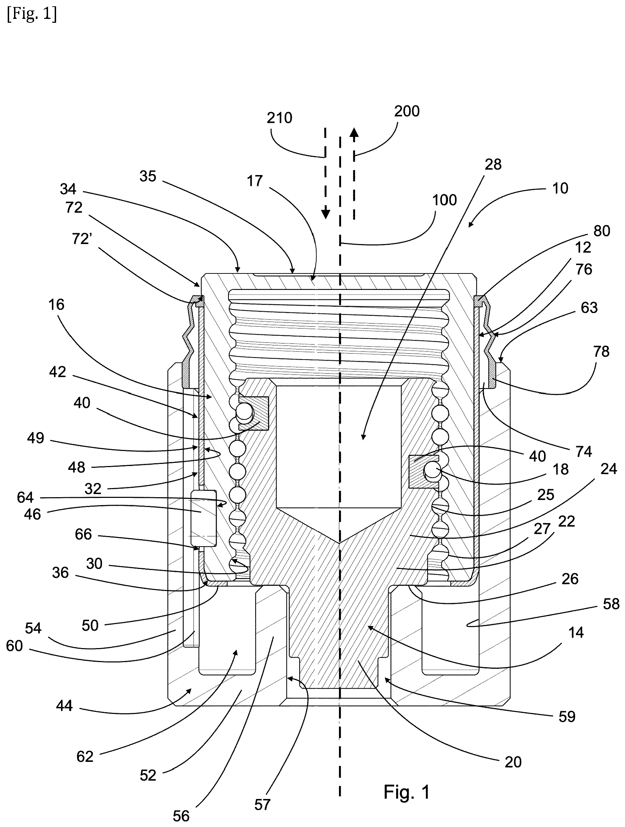

Sur la figure 1 est illustré un premier mode de réalisation d'un mécanisme d'actionneur de frein **10** comportant un cylindre de guidage **44** fixe définissant un axe de référence **100** du mécanisme d'actionneur de frein **10** et un piston **12** coulissant en translation dans le cylindre de guidage **44** le long de l'axe de référence **100,** qui est également un axe de référence du piston, pour venir en appui direct ou indirect contre un étrier de frein (non représenté). Le piston **12** comprend une douille **42** et un écrou **16,** l'écrou **16** faisant partie d'un mécanisme de vis à billes comportant deux composants filetés, à savoir une vis **14** et l'écrou **16,** et des billes **18.**

La vis **14** est de préférence métallique, par exemple en acier tels que les aciers 20MnCr5, 23MnB4, Scr420, 16MnCr5 ou leurs équivalents suivant les autres normes internationales ou nationales, ou de l'acier à haut taux de carbone tel que l'acier 100Cr6, C50 ou C56 ou leurs équivalents, et peut comprendre une tête de vis **20,** une portion de liaison **22** et un corps de vis **24.** Le corps de vis **24** présente un diamètre supérieur à la tête de vis **20,** la portion de liaison **22** réalisant la liaison entre le corps de vis **24** et la tête de vis **20.** Cette portion de liaison **22** peut être tronconique, de préférence cylindrique, et forme un premier épaulement plan **26.** La tête de vis **20** est conformée pour être solidarisée en rotation à un arbre de sortie d'un moteur électrique ou d'un motoréducteur, et peut présenter, par exemple une interface non circulaire, par exemple à quatre, six ou huit pans.

Le corps de vis **24** présente un filet de vis **25** qui forme un chemin de roulement hélicoïdal intérieur autour de l'axe de référence **100** du mécanisme de vis à billes, le chemin de roulement hélicoïdal intérieur étant tourné radialement à l'opposé de l'axe de référence **100.** En outre, la vis **14** présente une cavité centrale ouverte **28** permettant d'alléger l'ensemble du mécanisme d'actionneur de frein **10,** et d'offrir un réceptacle pour de la graisse contenue dans le mécanisme de vis à billes.

L'écrou **16** est réalisé en acier, par exemple l'acier 20MnCr5, 23MnB4, Scr420, 16MnCr5 ou leurs équivalents suivant les autres normes internationales ou nationales, ou de l'acier à haut taux de carbone tel que l'acier 100Cr6, C50 ou C56 ou leurs équivalents. L'écrou **16**présente globalement une forme cylindrique dont l'axe central est l'axe de référence **100.** L'écrou **16** présente un filet d'écrou **27** qui forme un chemin de roulement hélicoïdal extérieur autour de l'axe de référence **100,** et tourné radialement vers l'axe de référence **100.** L'écrou **16** présente une face périphérique extérieure **32** cylindrique dans laquelle est formée une mortaise de blocage **64.**

De plus, l'écrou **16** est du type fermé au sens où il présente un fond **17,** avec une face de fermeture extérieure **34** qui peut présenter un évidement 35, et est configuré pour entrer en contact direct ou indirect avec un étrier de frein (non représenté sur les figures). La face de fermeture extérieure **34** présente en outre une collerette **72,** saillante radialement de la paroi périphérique extérieure **32,** qui forme un épaulement de collerette **72'.** La collerette **72** permet en outre de limiter les éventuelles déformations de la face de fermeture extérieure **34** sous les contraintes mécaniques lors de l'activation du mécanisme d'actionneur de frein **10** par exemple.

L'un des deux composants filetés, à savoir la vis **14** ou l'écrou **16,** peut en outre être équipé de moyens de recirculation **40** des billes **18,** qui peuvent comporter un ou plusieurs recirculateurs traversant chacun un filet du composant fileté, comme illustré sur la figure 1, ou des paires de recirculateurs disposés aux extrémités d'un canal de recirculation qui enjambe une ou plusieurs spires des chemins de roulement de la vis **14** et de l'écrou **16.** Le système pourrait également fonctionner sur un système sans recirculation.

Les billes **18** peuvent être par exemple réalisées en acier ou en céramique, et sont dimensionnées et positionnées pour circuler en circuit fermé entre le chemin de roulement hélicoïdal extérieur de l'écrou **16** et le chemin de roulement hélicoïdal intérieur de la vis **14,** ainsi, le cas échéant, que par les moyens de recirculation **40,** de préférence sans séparateurs entre les billes **18.**

La douille **42** est métallique, par exemple en acier, par exemple l'acier 20MnCr5, 23MnB4, Scr420, 16MnCr5 ou leurs équivalents suivant les autres normes internationales ou nationales, ou de l'acier à haut taux de carbone tel que l'acier 100Cr6, C50 ou C56 ou leurs équivalents. La douille **42** présente une face intérieure cylindrique **48** frettée sur au moins une partie de la paroi périphérique extérieure **32** de l'écrou **16.** La douille **42** présente une face extérieure de la douille **49,** et une épaisseur entre la face intérieure cylindrique **48** et la face extérieure de la douille **49** est de l'ordre de 1 mm. La douille **42** présente une fente de blocage **66,** tel un trou traversant, globalement rectangulaire, située à proximité de la face annulaire d'extrémité **36** de l'écrou **16.** La fente de blocage **66** donne accès à la mortaise de blocage **64** de l'écrou **16.** En outre, la douille **42** peut présenter un épaulement de douille **50** qui repose axialement sur la face annulaire d'extrémité **36** de l'écrou **16,** opposée au fond **17** de l'écrou.

Le mécanisme d'actionneur de frein **10** comprend également un coulisseau **46,** fretté dans la mortaise de blocage **64,** en saillie radiale vers le cylindre de guidage **44** à travers la fente de blocage **66,** par rapport à la face extérieure de la douille **49.**

Le cylindre de guidage **44** est constitué d'une base métallique, par exemple en acier, et comprend une embase annulaire de préférence plane **52,** un corps de guidage **54** en saillie axiale depuis la périphérie extérieure de l'embase annulaire **52,** et une jupe intérieure d'étanchéité **56** en saillie axiale depuis la périphérie intérieure de l'embase annulaire **52.**

Le corps de guidage **54** est un cylindre dont l'axe central est l'axe de référence **100.** Le corps de guidage **54** comprend une paroi de guidage intérieure **58,** tournée radialement vers l'axe de référence **100,** en contact glissant avec la douille **42.**

La jupe intérieure d'étanchéité **56** présente une face intérieure cylindrique **57,** tournée radialement vers l'axe de référence **100,** délimitant un espace intermédiaire **59.** La portée intérieure de guidage **57** est positionnée en regard et à faible distance de la tige de vis **20,** afin de constituer dans cette zone une étanchéité dynamique sans contact, afin de maintenir la graisse de lubrification dans le cylindre de guidage **44.**

L'embase annulaire **52,** le corps de guidage **54** et la jupe intérieure de guidage **56** délimitent un espace annulaire **62.**

Le corps de guidage **54** présente une extrémité annulaire ouverte **63** comprenant un chambrage **74.** Le corps de guidage **54** comprend une cannelure axiale de blocage **60** longitudinale, s'étendant depuis l'extrémité annulaire ouverte **63** vers l'embase annulaire **52,** sur une distance prédéterminée, par exemple 9/10 de la hauteur de la paroi de guidage intérieure **58.** La cannelure de blocage **60** est configurée pour accueillir le coulisseau **46** en contact glissant, afin de bloquer le piston **12** en rotation par rapport au cylindre de guidage **44,** tout en lui permettant un mouvement de translation dans le cylindre de guidage **44.**

Le mécanisme d'actionneur de frein **10** présente en outre un soufflet annulaire **76,** comprenant une base annulaire du soufflet **78** configurée pour s'insérer dans le chambrage **74,** et une tête de soufflet **80** configurée pour être pincée entre l'épaulement de collerette **72'** de la collerette **72,** et la douille **42,** radialement en appui sur la paroi périphérique extérieure **32.** Ce soufflet annulaire **76** permet d'éviter les intrusions de polluants à l'intérieur du cylindre de guidage **44** en réalisant une étanchéité primaire. Le soufflet annulaire **76** est optionnel, et peut donc ne pas être intégré au mécanisme d'actionneur de frein **10** si ce dernier est destiné à fonctionner dans un environnement non pollué.

Lorsque le piston **12** du mécanisme d'actionneur de frein **10** est assemblé, l'écrou **16** est inséré en force dans la douille **42,** dans une direction axiale d'assemblage **210,** jusqu'à ce que la face annulaire d'extrémité **36** de l'écrou **16** bute contre l'épaulement de douille **50** ou jusqu'à une position axiale permettant de garantir le maintien en position du soufflet annulaire 76. La douille **42** ainsi frettée sur l'écrou **16** permet de constituer un ensemble monobloc. Le montage est effectué avec une indexation angulaire de sorte que la mortaise de blocage **64** de l'écrou **16** et la fente de blocage **66** de la douille **42** sont situées l'une en face de l'autre, et que la fente de blocage **66** permette d'accéder à la mortaise de blocage **64.**

Le coulisseau **46** est ensuite inséré dans la mortaise de blocage **64** de l'écrou **16** à travers la fente de blocage **66.**

La vis **14** est ensuite insérée dans l'écrou **16** du piston **12,** par un mouvement hélicoïdal progressif permettant d'insérer unes à unes les billes **18.**

Le sous-ensemble constitué de la vis **14** et du piston **12** équipé du coulisseau **46** est ensuite inséré dans le cylindre de guidage **44** dans la direction axiale d'assemblage **210.** Pour ce faire, la fente de blocage **66** de la douille **42** et la mortaise de blocage **64** de l'écrou **16** doivent être insérées au regard de la cannelure de blocage **60** du corps de guidage **54** du cylindre de blocage **44,** tandis que le coulisseau **46** pénètre dans la cannelure de blocage **60.** La face extérieure de la douille **49** entre alors en contact glissant avec la paroi de guidage intérieure **58** du corps de guidage **54.**

Le coulisseau **46** insérée dans la cannelure de blocage **60** ne possède qu'un degré de liberté, aux jeux fonctionnels près, en translation parallèlement à l'axe de référence **100** dans la cannelure de blocage **60.** Le coulisseau **46** bloque alors le piston **12** en rotation autour de l'axe de référence **100,** tout en lui laissant un degré de liberté de translation parallèlement à l'axe de référence **100.**

Lorsque le piston **12,** la douille **42** et le coulisseau **46** sont insérés dans le cylindre de guidage **44** et atteignent leur position d'utilisation, le premier épaulement plan 26 de la portion de liaison 22 de la vis **14** bute sur la jupe intérieure de guidage 56, tandis que la tige de vis **20** est logée dans l'espace intermédiaire **59.**

Enfin, le soufflet annulaire 76 peut être monté pour assurer l'étanchéité primaire de l'actionneur de frein **10.**

En fonctionnement, un mouvement de rotation de la vis **14** autour de l'axe de référence **100,** entraînée en rotation au niveau de la tête de vis **20** par un moteur, génère un mouvement de translation du piston **12** dans un sens qui est fonction du sens de rotation de la vis **14.**

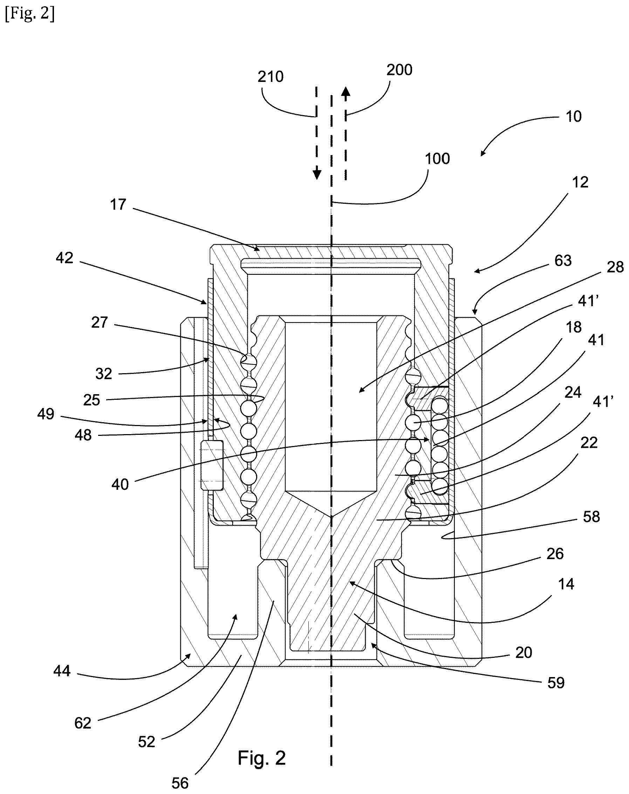

Selon un autre mode de réalisation, illustré sur la figure 2, le mécanisme d'actionneur de frein **10** diffère de celui décrit dans le premier mode de réalisation en ce que le mécanisme d'actionneur de frein **10** ne présente pas de soufflet annulaire **76** ni de chambrage **74.** En outre, les moyens de recirculation **40** sont constitués au niveau de l'écrou **16** qui présente un canal de recirculation externe **41** et des recirculateurs **41',** permettant la recirculation externe des billes **18.** Le canal de recirculation **41** est ici ouvert, et refermé lors de l'assemblage du mécanisme d'actionneur de frein **10** par la face intérieure cylindrique **48** de la douille **42.** En l'absence de soufflet, l'étanchéité est réalisée à ce niveau par le contact glissant entre la douille **42** et la paroi de guidage intérieure **58** du corps de guidage **54.**

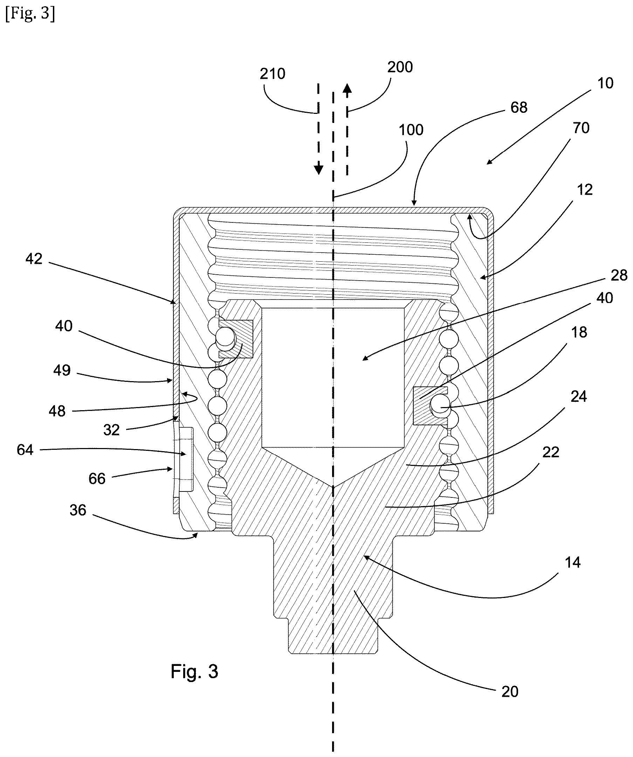

Selon un troisième mode de réalisation illustré sur la figure 3, le mécanisme d'actionneur de frein **10** diffère de celui décrit dans le premier mode de réalisation en ce que le mécanisme d'actionneur de frein **10** ne présente pas de soufflet annulaire **76** ni de chambrage **74.** En outre, l'écrou **16** est du type ouvert, et ne présente pas de face de fermeture extérieure **34.** De plus, la douille **42** ne présente pas l'épaulement de douille **50** qui repose axialement dans la direction axiale **200** opposée à la direction d'assemblage **210** sur la face annulaire d'extrémité **36** de l'écrou **16.**

La douille **42** présente alors un fond fermé **68,** de préférence plat, venant s'épauler contre une surface annulaire d'extrémité supérieure de l'écrou **70.** Le fond fermé de douille **68** appuie alors directement ou indirectement contre le patin de frein lorsque le mécanisme d'actionneur de frein **10** est actionné. A contrario, lorsque le mécanisme d'actionneur de frein **10** n'est pas actionné et donc que le piston **12** est en position libre, c'est la face annulaire d'extrémité **36** de l'écrou **16** qui bute contre l'embase **52.**

Dans tous les modes de réalisation décrits ci-dessus, la douille **42** subit, avant son assemblage sur l'écrou **16,** un traitement thermochimique afin de résister à l'abrasion et à la corrosion à une température Ts jusqu'à obtention d'une couche de surface de résistance à l'abrasion et à la corrosion riche en azote. Le traitement afin d'obtenir une pareille couche inclut une nitruration ou une nitrocarburation, la température Ts étant comprise entre 300°C et 580°C. La nitruration et/ou la nitrocarburation permettent au nitrure de se former en surface quand on place une pièce dans une atmosphère de traitement très riche en azote à la température Ts, permettant la formation d'un matériau différent en surface. Grâce à ce traitement, la face extérieure **49** de la douille **42** du piston **12** résiste à l'abrasion et à la corrosion qui pourraient survenir dans les conditions d'utilisation, lorsque le piston **12** coulisse en translation dans le cylindre de guidage **44.** La nitrocarburation ne modifiant pas la planéité d'une surface, il est donc possible de rectifier la face extérieure **49** de la douille **42** avant l'application du traitement thermochimique.

De même, l'écrou **16** est soumis à un traitement thermochimique de durcissement incluant une chauffe à une température Tc supérieure d'au moins 200°C à Ts, de préférence supérieure au moins à 900°C. Le traitement thermochimique de durcissement, par exemple du type cémentation de surface ou à cœur, inclut ensuite une trempe et un revenu à une température Tr inférieure d'au moins 100°C à Ts, de préférence inférieure à 200°C. Ce traitement permet l'obtention d'une couche superficielle durcie, riche en carbone au moins localement au niveau du filet d'écrou **27** de la surface intérieure de l'écrou **30.** Grâce à ce traitement, le filet d'écrou **27** a une dureté accrue en surface et en profondeur, ce qui lui permet d'être plus durable en résistant à l'écaillage par exemple. La cémentation modifie cependant la planéité d'une surface d'une pièce, il est donc nécessaire de procéder à une étape de rectification, tournage dur ou fraisage dur sur la surface intérieure de l'écrou **30** après l'application du traitement thermochimique.

Dans les deux premiers modes de réalisation, la partie en contact avec l'étrier de frein ou son mécanisme d'actionnement, autrement dit la face de fermeture extérieure **34,** subit de préférence l'application d'un revêtement de surface supplémentaire. Ce traitement supplémentaire est par exemple une application de zinc lamellaire en surface ou autre procédé de traitement de surface. Ce traitement supplémentaire permet de rendre la face de fermeture extérieure **34** plus résistante aux pressions lors de l'actionnement du mécanisme d'actionneur de frein **10.** Pour le troisième mode de réalisation, ce traitement supplémentaire n'est pas nécessaire, du fait des propriétés anti-corrosion apportées par le traitement thermochimique de la douille.

Le traitement thermochimique de durcissement (cémentation / trempe / revenu) implique l'introduction de carbone au moins dans une couche de surface d'un matériau en acier puis sa fixation par la trempe et le revenu. L'objectif est d'augmenter la teneur en carbone au moins près de la surface pour conférer à la pièce la dureté souhaitée.

Le traitement thermochimique de résistance à l'abrasion et à la corrosion (nitruration/nitrocarburation) implique l'introduction d'azote dans la couche de surface du matériau. Il peut produire des couches superficielles très résistantes à l'usure, en particulier lorsque des nitrures, tels que le nitrure de fer (Fe₃N) ou le nitrure de chrome (Cr₂N), se forment à la surface.

Si le traitement thermochimique de résistance à l'abrasion et à la corrosion est réalisé après assemblage de la douille **42** sur l'écrou **16** et après le traitement thermochimique de durcissement de l'écrou **16,** il n'est pas possible d'isoler thermiquement l'écrou, de sorte que le filet d'écrou **27** sont portés à une température proche de Ts, suffisante pour anéantir l'effet de fixation du carbone obtenu par la trempe et le revenu. Inversement, si le traitement thermochimique de durcissement est réalisé après assemblage de la douille **42** sur l'écrou **16** et après le traitement thermochimique de résistance à l'abrasion et à la corrosion, il n'est pas possible d'isoler thermiquement la douille **42,** de sorte que celle-ci est portée à une température proche de Tc, bien supérieure à Ts, qui libère les composés azotés fixés à la surface de la douille **42** par le traitement thermochimique de résistance à l'abrasion et à la corrosion. C'est la raison pour laquelle ces deux traitements incompatibles sont réalisés sur les deux pièces, à savoir l'écrou **16** et la douille **42,** avant leur assemblage.

Naturellement, les exemples représentés sur les figures et discutés ci-dessus ne sont donnés qu'à titre illustratif et non limitatif. Il est explicitement prévu que l'on puisse combiner entre eux les différents modes de réalisation illustrés pour en proposer d'autres.

Suivant une variante non illustrée, le canal de recirculation externe **41** est situé dans la vis **14.**

Suivant une autre variante, la douille **42** et/ou le cylindre de guidage **44** sont composés chacun d'une base métallique traitée selon le traitement thermochimique décrit plus haut et de résine comprenant les propriétés recherchées afin de diminuer les frictions entre la douille **42** et le cylindre de guidage **44,** la résine pouvant former la douille **42** et/ou le cylindre de guidage **44** par moulage ou impression 3D par exemple.

## Revendications

1. Procédé de fabrication d'un piston (12) d'un mécanisme d'actionneur de frein (10), le piston (12) comportant
- un écrou (16) de mécanisme de vis à billes, définissant un axe de référence (100), une paroi périphérique extérieure (32) et un filet d'écrou (27) destiné à former un chemin de roulement pour des billes (18) du mécanisme de vis à billes ;
- une douille (42) solidaire de l'écrou (16) et recouvrant au moins partiellement la paroi périphérique extérieure (32) de l'écrou (16), la douille (42) étant destinée à venir en contact glissant ajusté avec une paroi de guidage intérieure (58) d'un cylindre de guidage (44) du mécanisme d'actionneur de frein (10) ;
**caractérisé en ce qu'**avant de solidariser la douille (42) à la paroi périphérique extérieure (32) de l'écrou (16), la douille (42) est soumise à un traitement thermochimique de résistance à l'abrasion et à la corrosion à une température Ts jusqu'à obtention d'une couche de surface de résistance à l'abrasion et à la corrosion riche en azote, et l'écrou (16) est soumis à un traitement thermochimique de durcissement incluant une chauffe à une température Tc supérieure d'au moins 200°C à Ts, puis une trempe et un revenu à une température Tr inférieure d'au moins 100°C à Ts, et l'obtention d'une zone durcie riche en carbone au moins localement au niveau du filet d'écrou (27).

2. Procédé selon la revendication 1, **caractérisé en ce que** le traitement thermochimique de durcissement inclut un traitement de cémentation, la température Tc étant supérieure à 900°C, la température Tr étant inférieure à 250°C.

3. Procédé selon la revendication 1 ou 2, **caractérisé en ce que** le traitement de résistance à l'abrasion et à la corrosion inclut une nitruration ou une nitrocarburation, la température Ts étant comprise entre 300°C et 580°C.

4. Procédé selon l'une quelconque des revendications précédentes, **caractérisé en ce qu'**une face extérieure de la douille (49) est rectifiée avant d'être soumise au traitement thermochimique de résistance à l'abrasion et à la corrosion.

5. Procédé selon l'une quelconque des revendications précédentes, **caractérisé en ce qu'**après achèvement du traitement thermochimique de résistance à l'abrasion et à la corrosion et du traitement thermochimique de durcissement, la douille (42) est solidarisée, de préférence par frettage, sur la paroi périphérique extérieure (32) de l'écrou (16).

6. Procédé selon l'une quelconque des revendications précédentes, **caractérisé en ce qu'**une surface extérieure d'une paroi de fond (17) de l'écrou (16) ou de la douille (42) subit un traitement anticorrosion supplémentaire.

7. Procédé selon la revendication 6, **caractérisé en ce que** le traitement anticorrosion supplémentaire est un traitement de revêtement de zinc lamellaire.

8. Procédé selon l'une quelconque des revendications précédentes, **caractérisé en ce qu'**un coulisseau (46) du piston (12) subit un traitement de surface avant d'être partiellement insérée dans un logement formé dans l'écrou (16) et la douille (42).

9. Procédé selon la revendication 8, **caractérisé en ce que** le traitement de surface du coulisseau (46) est une nitrocarburation.

10. Piston (12) **caractérisé en ce qu'**il est fabriqué selon le procédé de fabrication de l'une quelconque des revendications précédentes.

11. Piston (12) selon la revendication 10, **caractérisé en ce que** l'écrou (16) présente un canal de recirculation externe (41) ouvert, fermé au moins en partie par la douille (42).

12. Piston (12) selon la revendication 10 ou 11, **caractérisé en ce que** la douille (42) présente un fond (68).

13. Piston (12) selon l'une quelconque des revendications 10 à 12, **caractérisé en ce que** la douille (42) présente un rabat de matière (50) sur une face annulaire d'extrémité (36) de l'écrou (16).

14. Piston (12) selon l'une quelconque des revendications 10 à 13, **caractérisé en ce qu'**il comprend un coulisseau (46) en saillie axiale vers l'extérieur.

15. Mécanisme d'actionneur de frein (10), comportant :
- un cylindre de guidage (44) définissant un axe de référence (100) du mécanisme d'actionneur de frein (10) ;
- un mécanisme de vis à billes, comportant une vis (14) et un écrou (16) centrés sur l'axe de référence (100), et des billes (18), la vis (14) présentant au moins un filet de vis (25) formant un chemin de roulement pour les billes (18), l'écrou (16) présentant un filet d'écrou (27) formant un chemin de roulement pour les billes (18) et une paroi périphérique extérieure (32) ; et
- une douille (42) solidaire de l'écrou (16) et recouvrant au moins partiellement la paroi périphérique extérieure (32) de l'écrou (16), la douille (42) venant en contact glissant ajusté avec une paroi de guidage intérieure (58) du cylindre de guidage (44) ;
**caractérisé en ce que** la douille (42) et l'écrou (16) constituent un piston (12) selon l'une quelconque des revendications 10 à 14.

## Patentansprüche

1. Verfahren zur Herstellung eines Kolbens (12) eines Bremsbetätigungsmechanismus (10), wobei der Kolben (12) Folgendes aufweist:
- eine Mutter (16) eines Kugelspindelmechanismus, die eine Referenzachse (100), eine äußere Umfangswand (32) und ein Muttergewinde (27) definiert, das dazu bestimmt ist, eine Laufbahn für Kugeln (18) des Kugelspindelmechanismus zu bilden;
- eine Hülse (42), die mit der Mutter (16) fest verbunden ist und die äußere Umfangswand (32) der Mutter (16) mindestens teilweise überdeckt, wobei die Hülse (42) dazu bestimmt ist, in angepassten Gleitkontakt mit einer inneren Führungswand (58) eines Führungszylinders (44) des Bremsstellmechanismus (10) zu treten;
**dadurch gekennzeichnet, dass** vor dem Verbinden der Hülse (42) mit der äußeren Umfangswand (32) der Mutter (16) die Hülse (42) bis zum Erhalten einer stickstoffreichen abrieb- und korrosionsbeständigen Oberflächenschicht einer thermochemischen Abrieb- und Korrosionsbeständigkeitsbehandlung bei einer Temperatur Ts unterzogen wird, und die Mutter (16) einer thermochemischen Härtungsbehandlung unterzogen wird, die ein Erhitzen auf eine Temperatur Tc umfasst, die mindestens 200 °C höher als Ts ist, dann ein Abschrecken und ein Anlassen bei einer Temperatur Tr, die mindestens 100 °C niedriger als Ts ist, und das Erhalten einer zumindest lokal im Bereich des Muttergewindes (27) kohlenstoffreichen gehärteten Zone.

2. Verfahren nach Anspruch 1, **dadurch gekennzeichnet, dass** die thermochemische Härtungsbehandlung eine Aufkohlungsbehandlung umfasst, wobei die Temperatur Tc über 900 °C liegt und die Temperatur Tr unter 250 °C liegt.

3. Verfahren nach Anspruch 1 oder 2, **dadurch gekennzeichnet, dass** die Abrieb- und Korrosionsbeständigkeitsbehandlung eine Nitrierung oder eine Nitrocarburierung umfasst, wobei die Temperatur Ts zwischen 300 °C und 580 °C liegt.

4. Verfahren nach einem der vorstehenden Ansprüche,
**dadurch gekennzeichnet, dass** eine Außenfläche der Hülse (49) geschliffen wird, bevor sie der thermochemischen Abrieb- und Korrosionsbeständigkeitsbehandlung unterzogen wird.

5. Verfahren nach einem der vorstehenden Ansprüche,
**dadurch gekennzeichnet, dass** nach Abschluss der thermochemischen Abrieb-und Korrosionsbeständigkeitsbehandlung und der thermochemischen Härtungsbehandlung die Hülse (42), vorzugsweise durch Schrumpfung, an der äußeren Umfangswand (32) der Mutter (16) befestigt wird.

6. Verfahren nach einem der vorstehenden Ansprüche,
**dadurch gekennzeichnet, dass** eine Außenfläche einer Bodenwand (17) der Mutter (16) oder der Hülse (42) einer zusätzlichen Korrosionsschutzbehandlung unterzogen wird.

7. Verfahren nach Anspruch 6, **dadurch gekennzeichnet, dass** die zusätzliche Korrosionsschutzbehandlung eine Behandlung mit lamellarer Zinkbeschichtung ist.

8. Verfahren nach einem der vorstehenden Ansprüche,
**dadurch gekennzeichnet, dass** ein Schieber (46) des Kolbens (12) einer Oberflächenbehandlung unterzogen wird, bevor er teilweise in eine in der Mutter (16) und der Hülse (42) gebildete Aufnahme eingesetzt wird.

9. Verfahren nach Anspruch 8, **dadurch gekennzeichnet, dass** die Oberflächenbehandlung des Schiebers (46) eine Nitrocarburierung ist.

10. Kolben (12), **dadurch gekennzeichnet, dass** er nach dem Herstellungsverfahren nach einem der vorstehenden Ansprüche hergestellt ist.

11. Kolben (12) nach Anspruch 10, **dadurch gekennzeichnet, dass** die Mutter (16) einen offenen externen Umlaufkanal (41) aufweist, der mindestens teilweise durch die Hülse (42) verschlossen wird.

12. Kolben (12) nach Anspruch 10 oder 11, **dadurch gekennzeichnet, dass** die Hülse (42) einen Boden (68) aufweist.

13. Kolben (12) nach einem der Ansprüche 10 bis 12,
**dadurch gekennzeichnet, dass** die Hülse (42) auf einer ringförmigen Stirnfläche (36) der Mutter (16) eine Materiallasche (50) aufweist.

14. Kolben (12) nach einem der Ansprüche 10 bis 13,
**dadurch gekennzeichnet, dass** er einen axial nach außen vorstehenden Schieber (46) umfasst.

15. Bremsbetätigungsmechanismus (10), Folgendes umfassend:
- einen Führungszylinder (44), der eine Referenzachse (100) des Bremsstellmechanismus (10) definiert;
- einen Kugelspindelmechanismus, umfassend eine Spindel (14) und eine Mutter (16), die auf der Bezugsachse (100) zentriert sind, sowie Kugeln (18), wobei die Spindel (14) mindestens ein Spindelgewinde (25) aufweist, das eine Laufbahn für die Kugeln (18) bildet, wobei die Mutter (16) ein Muttergewinde (27), das eine Laufbahn für die Kugeln (18) bildet, und eine äußere Umfangswand (32) aufweist; und
eine Hülse (42), die mit der Mutter (16) fest verbunden ist und die äußere Umfangswand (32) der Mutter (16) mindestens teilweise überdeckt, wobei die Hülse (42) in angepassten Gleitkontakt mit einer inneren Führungswand (58) des Führungszylinders (44) tritt;
**dadurch gekennzeichnet, dass** die Hülse (42) und die Mutter (16) einen Kolben (12) nach einem der Ansprüche 10 bis 14 bilden.

## Claims

1. A method of manufacturing a piston (12) of a brake actuator mechanism (10), the piston (12) comprising
- a nut (16) of a ball screw mechanism, defining a reference axis (100), an outer peripheral wall (32) and a nut thread (27) for forming a raceway for balls (18) of the ball screw mechanism;
- a bushing (42) secured to the nut (16) and at least partially covering the outer peripheral wall (32) of the nut (16), the bushing (42) being intended to come into tight sliding contact with an inner guide wall (58) of a guide cylinder (44) of the brake actuator mechanism (10);
**characterized in that** prior to securing the bushing (42) to the outer peripheral wall (32) of the nut (16), the bushing (42) is subjected to a thermochemical abrasion and corrosion resistance treatment at a temperature Ts until a nitrogen-rich abrasion- and corrosion-resistant surface layer is obtained, and the nut (16) is subjected to a thermochemical hardening treatment including heating to a temperature Tc at least 200°C higher than Ts, followed by quenching and tempering to a temperature Tr at least 100°C lower than Ts, and obtaining a carbon-rich hardened zone at least locally at the nut thread (27).

2. The method according to claim 1, **characterized in that** the thermochemical hardening treatment includes a carburizing treatment, the temperature Tc being greater than 900°C, the temperature Tr being less than 250°C.

3. The method according to claim 1 or 2, **characterized in that** the abrasion and corrosion resistance treatment includes nitriding or nitrocarburizing, the temperature Ts being between 300°C and 580°C.

4. The method according to any one of the preceding claims, **characterized in that** an outer face of the bushing (49) is ground before being subjected to the thermochemical abrasion and corrosion resistance treatment.

5. The method according to any one of the preceding claims, **characterized in that**, after completion of the thermochemical abrasion and corrosion resistance treatment and the thermochemical hardening treatment, the bushing (42) is secured, preferably by shrinking, to the outer peripheral wall (32) of the nut (16).

6. The method according to any one of the preceding claims, **characterized in that** an outer surface of a bottom wall (17) of the nut (16) or bushing (42) undergoes an additional anti-corrosion treatment.

7. The method according to claim 6, **characterized in that** the additional anticorrosion treatment is a zinc flake coating treatment.

8. The method according to any one of the preceding claims, **characterized in that** a slider (46) of the piston (12) undergoes a surface treatment before being partially inserted into a housing formed in the nut (16) and the bushing (42).

9. The method according to claim 8, **characterized in that** the surface treatment of the slider (46) is nitrocarburizing.

10. A piston (12), **characterized in that** it is manufactured according to the manufacturing method of any one of the preceding claims.

11. The piston (12) according to claim 10, **characterized in that** the nut (16) has an open external recirculation channel (41), closed at least in part by the bushing (42).

12. The piston (12) according to claim 10 or 11, **characterized in that** the bushing (42) has a bottom (68).

13. The piston (12) according to any one of claims 10 to 12, **characterized in that** the bushing (42) has a material fold (50) on an annular end face (36) of the nut (16).

14. The piston (12) according to any one of claims 10 to 13, **characterized in that** it comprises an axially outwardly projecting slider (46).

15. A brake actuator mechanism (10), comprising:
- a guide cylinder (44) defining a reference axis (100) of the brake actuator mechanism (10);
- a ball screw mechanism, comprising a screw (14) and a nut (16) centered on the reference axis (100), and balls (18), the screw (14) having at least one screw thread (25) forming a raceway for the balls (18), the nut (16) having a nut thread (27) forming a raceway for the balls (18) and an outer peripheral wall (32); and
- a bushing (42) secured to the nut (16) and at least partially covering the outer peripheral wall (32) of the nut (16), the bushing (42) coming into tight sliding contact with an inner guide wall (58) of the guide cylinder (44);
**characterized in that** the bushing (42) and the nut (16) constitute a piston (12) according to any one of claims 10 to 14.
